(19) **Europäisches Patentamt** / **European Patent Office** / **Office européen des brevets**

(11) **EP 1 717 490 B1**

(12) **EUROPEAN PATENT SPECIFICATION**

(45) Date of publication and mention
of the grant of the patent:
**15.09.2010 Bulletin 2010/37**

(51) Int Cl.:
***F16H 61/24*** *(2006.01)*    *F16H 63/30* *(2006.01)*

(21) Application number: **06252196.8**

(22) Date of filing: **24.04.2006**

(54) **Shift mechanism of transmission**

Getriebebetätigungsmechanismus

Mécanisme de commande de transmission

(84) Designated Contracting States:
**DE FR GB IT**

(30) Priority: **28.04.2005 JP 2005132610**

(43) Date of publication of application:
**02.11.2006 Bulletin 2006/44**

(73) Proprietor: **Toyota Jidosha Kabushiki Kaisha**
**Toyota-shi, Aichi-ken, 471-8571 (JP)**

(72) Inventor: **Nakahara, Yoshihito c/o Toyota Jidosha K. K.**
**Toyota-shi, Aichi-ken 471-8571 (JP)**

(74) Representative: **Albutt, Anthony John et al**
**D Young & Co LLP**
**120 Holborn**
**London EC1N 2DY (GB)**

(56) References cited:
**EP-A1- 0 933 563**    **DE-A1- 19 523 141**
**DE-U1-202004 006 953**    **US-A1- 2005 072 259**

## Description

BACKGROUND OF THE INVENTION

Field of the Invention

The present invention relates to a shift mechanism of a transmission having an inertia mass (a mass damper).

Description of the Background Art

Conventionally, shift mechanisms of a transmission have been disclosed for example in Japanese Patent Laying-Open No. 08-42689 (document 1), Japanese Patent Laying-Open No. 09-257127 (document 2), and Japanese Patent Laying-Open No. 2001-246957 (document 3). Utility model DE-U1-202004006953 (Getrag Getriebe Zahniad [DE]) dated 5 August 2004 , which constitutes the closest prior art, discloses a shift mechanism of a transmission according to the preamble of claim 1 or claim 4.

Document DE-A1-19532141 (Daimler Benz AG [DE]) dated 2 January 1997 discloses a mechanism comprising a gearchange shaft which is rotatably and axially shiftable in a housing. The shaft comprises a non-rotatable gear change lever kinematically connected to a hand gearchange lever. The gear change lever is acted upon by an extra mass increasing the shaft mass in inertial moment for reducing force peaks on the hand lever. The extra mass is swivelably mounted against a housing portion and operationally linked to the gear change lever.

SUMMARY OF THE INVENTION

Document 1 discloses a shift mechanism having no mass damper. Document 2 discloses a shift device for a transmission of an automobile in which a load mass is provided on a cantilever arm coupled to a gearshift. Document 3 discloses a shift lever structure of a manual transmission having a shift lever provided within a vehicle cabin, a cable lever provided outside the manual transmission, and a shift cable connecting the shift lever with the cable lever, wherein a gear shifting portion of the manual transmission is provided in connection with one end of the shift lever, the shift cable is provided in confection with a central portion of the cable lever, and a mass portion formed separately is welded to the other end of the shift lever.

In the conventional techniques as described above, an inertia mass is provided outside a transmission cable in a shift mechanism of a manual transmission, deteriorating vehicle mountability of the transmission and extending the size of the transmission.

The above mentioned disadvantages of the prior art are overcome by a shift mechanism of a transmission according to claim 1 or claim 4.

According to claim 1 a shift mechanism of a transmission, comprises: a case, a shift select lever shaft accommodated in said case and capable of shifting in an axial direction and moving rotationally in a circumferential direction, a first inner lever engaging said shift select lever shaft at a first engaging portion within said case, coupled with an inertia mass, and moving rotationally about a first axis of rotational movement and ,a second inner lever, engaging said shift select lever shaft at a second engaging portion within said case, coupled with an outer lever, and moving rotationally about a second axis of rotational movement, wherein a length from said first axis of rotational movement to a center of gravity of said inertia mass is longer than a length from said first engaging portion to said first axis of rotational movement, and a length from said second axis of rotational movement to an operating point of said outer lever is longer than a length from said second engaging portion to said second axis of rotational movement.

According to claim 4 a shift mechanism of a transmission, comprises: a case; a shift select lever shaft accommodated in said case and capable of shifting in an axial direction and moving rotationally in a circumferential direction; a first inner lever engaging said shift select lever shaft at a first engaging portion within said case, coupled with an inertia mass, and moving rotationally about a first axis of rotational movement; and a second inner lever engaging said first inner lever at a second engaging portion within said case, coupled with an outer lever, and moving rotationally about a second axis of rotational movement, wherein a length from said first axis of rotational movement to a center of gravity of said inertia mass is longer than a length from said first engaging portion to said first axis of rotational movement, and a length from said second axis of rotational movement to an operating point of said outer lever is longer than a length from said second engaging portion to said second axis of rotational movement.

The sub-claims disclose further preferred developments of the invention.

BRIEF DESCRIPTION OF THE DRAWINGS

Fig. 1 is a cross sectional view of a shift mechanism of a transmission in accordance with a first embodiment of the present invention.
Fig. 2 is a cross sectional view along a line II-II in Fig. 1.
Fig. 3 is a cross sectional view of a first engaging portion and a second engaging portion in accordance with another example.
Fig. 4 is a cross sectional view of a shift mechanism of a transmission in accordance with a second embodiment of the present invention.
Fig. 5 is a plan view seen from a direction indicated by an arrow V in Fig. 4.
Fig. 6 is a cross sectional view along a line VI-VI in Fig. 4.

Fig. 7 is a cross sectional view of a shift select lever shaft in accordance with another example.

Fig. 8 is a cross sectional view of a shift mechanism of a transmission in accordance with a third embodiment of the present invention.

Fig. 9 is a cross sectional view along a line IX-IX in Fig. 8.

Fig. 10 is a cross sectional view of a second inner lever which has moved rotationally.

Fig. 11 is a cross sectional view along a line XI-XI in Fig. 8.

Fig. 12 is a cross sectional view of a shift mechanism of a transmission in accordance with a fourth embodiment of the present invention.

Fig. 13 is a plan view of the shift mechanism seen from a direction indicated by an arrow XIII in Fig. 12.

Fig. 14 is a cross sectional view along a line XIV-XIV in Fig. 12.

Fig. 15 is a cross sectional view along a line XV-XV in Fig. 12.

Fig. 16 is a plan view of inner levers shown to describe a structure capable of changing a lever ratio.

Fig. 17 is a plan view of a conventional inner lever.

Fig. 18 is a cross sectional view of the shift mechanism of a transmission in accordance with the first embodiment.

Fig. 19 is a cross sectional view of the shift mechanism of a transmission in accordance with the second embodiment.

## DESCRIPTION OF THE ILLUSTRATIVE EMBODIMENTS

First Embodiment

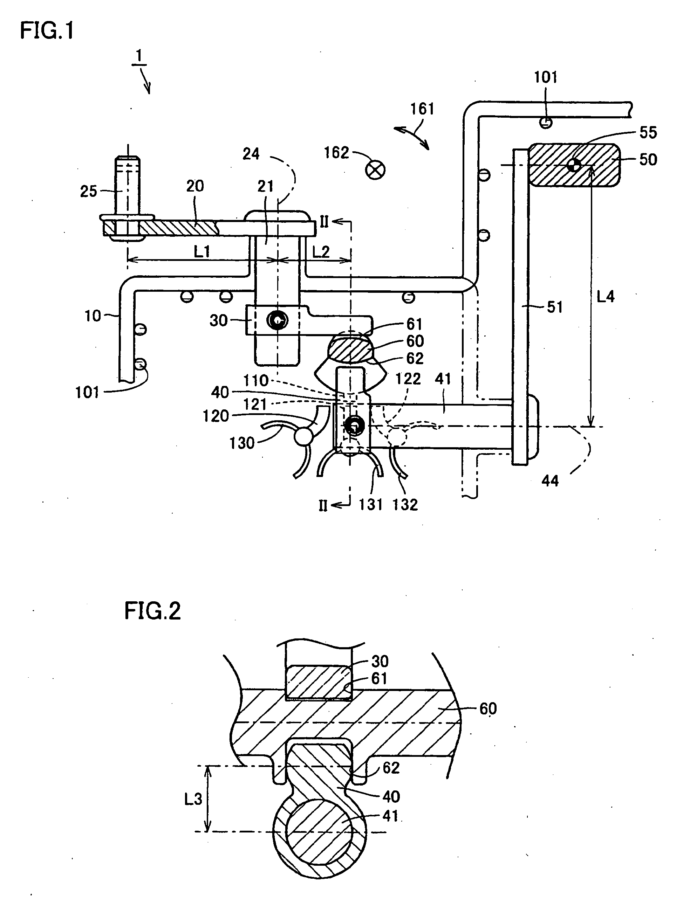

Fig. 1 is a cross sectional view of a shift mechanism of a transmission in accordance with a first embodiment of the present invention. Fig. 2 is a cross sectional view along a line II-II in Fig. 1. Referring to Figs. 1 and 2, a shift mechanism 1 of a transmission in accordance with the first embodiment of the present invention includes a case 10; a shift select lever shaft 60 accommodated in case 10 and capable of shifting in an axial direction and moving rotationally in a circumferential direction; a first inner lever 40 engaging shift select lever shaft 60 at a first engaging portion 62 within case 10, coupled with an inertia mass 50, and moving rotationally about a first axis of rotational movement 44 between inertia mass 50 and the first engaging portion 62; and a second inner lever 30 engaging shift select lever shaft 60 at a second engaging portion 61 within case 10, coupled with an outer lever 20, and moving rotationally about a second axis of rotational movement 24 between outer lever 20 and the second engaging portion 61. A length L4 from the first axis of rotational movement 44 to the center of gravity 55 is longer than a length L3 from the first engaging portion 62 to the first axis of rotational movement 44. A length L1 from the second axis of rotational movement 24 to an operation pin 25 as an operating point of outer lever 20 is longer than a length L2 from the second engaging portion 61 to the second axis of rotational movement 24.

Inertia mass 50 moves rotationally about the first axis of rotational movement 44 to move shift select lever shaft 60 in the axial direction.

The first axis of rotational movement 44 and the second axis of rotational movement 24 are not parallel to shift select lever shaft 60.

Shift mechanism 1 of a transmission is a mechanism for selecting an appropriate gear in a transmission mounted for example in a vehicle, and it is used as a part of a manual transmission. It may also be used as a part of a transmission electrically selecting a gear, or as a part of a transmission selecting an appropriate gear with an actuator or the like.

Case 10 is made for example of an aluminum alloy or the like to achieve light weight and high rigidity. Case 10 has a shape of a box, and various components (elements) constituting the shift mechanism of the manual transmission are accommodated therein.

Outer lever 20 is attached outside case 10. Outer lever 20 can move rotationally in a predetermined direction. A shaft 21 acts as the center of rotational movement, and shaft 21 moves rotationally about the second axis of rotational movement 24. Outer lever 20 moves rotationally about shaft 21. Shaft 21 is attached to one end of outer lever 20, and operation pin 25 as the operating point is attached to the other end of outer lever 20. Operation pin 25 is operated with a cable, and operation pin 25 can be moved rotationally about shaft 21.

Shaft 21 extends from the outside of case 10 to the inside of case 10, and its leading end portion is fixed to the second inner lever 30. Specifically, rotational movement of shaft 21 is transmitted to the second inner lever 30, and the second inner lever 30 moves rotationally about shaft 21.

A leading end portion of the second inner lever 30 engages the second engaging portion 61 of shift select lever shaft 60. Although the second engaging portion 61 is in a concave shape in the present embodiment, its shape is not limited to this. The second engaging portion 61 may be formed as a projection and the second inner lever 30 may be provided with a groove to receive the projection.

Shift select lever shaft 60 is a bar-like member extending in one direction, and it is slidable in a direction indicated by an arrow 162 and rotationally movable in a direction indicated by an arrow 161. Shift select lever shaft 60 is provided with a pin 110 selecting one of three shift heads 120 to 122. Shift heads 120 to 122 are provided with shift forks 130 to 132, respectively, each of which holds a hub sleeve constituting a synchronizing mechanism. The first inner lever 40 engages shift select lever shaft 60 by means of the first engaging portion 62.

The second inner lever 30 is disposed on an upper side of shift select lever shaft 60, and the first inner lever 40 is disposed on a lower side of shift select lever shaft 60. The first inner lever 40 is fixed to an end portion of shaft 41, and rotationally movable about shaft 41, specifically, the first axis of rotational movement 44. An arm 51 is attached to an end portion of shaft 41, and inertia mass 50 as a mass damper is disposed at a leading end of arm 51. Inertia mass 50 acts as a shift assist mechanism, and it has a function of assisting load imposed in a direction in which shift select lever shaft 60 shifts (slides). Thereby, gears inside the transmission can be engaged smoothly. Further, the presence of inertia mass 50 can prevent vibrations caused at various parts in a shift state due to contacts between metals from being transmitted to the vehicle cabin.

A lever ratio of inertia mass 50, that is, a ratio between a travel distance of operation pin 25 and a travel distance of inertia mass 50 is given by the following expression:

$$(L2/L1)\times(L4/L3)$$

where L1 is a radius of rotational movement of operation pin 25, L2 is a radius of rotational movement of the second inner lever 30, L3 is a radius of rotational movement of the first inner lever 40, and L4 is a radius of rotational movement of inertia mass 50. It is to be noted that, in the mechanism shown in Fig. 1, the direction indicated by arrow 161 is a select direction, and the direction indicated by arrow 162 is a shift direction.

Next, an operation of shift mechanism 1 will be described. When a driver operates a shift lever, this operation is transmitted to operation pin 25 via a cable, and operation pin 25 moves rotationally about the second axis of rotational movement 24. This rotational movement is transmitted to shaft 21. Shaft 21 rotationally moves the second inner lever 30, and this rotational movement is transmitted to shift select lever shaft 60 via the second engaging portion 61. Shift select lever shaft 60 slides in the direction indicated by arrow 162. When shift select lever shaft 60 slides, the fist inner lever 40 engaging shift select lever shaft 60 at the first engaging portion 62 moves rotationally about the first axis of rotational movement 44. This rotational movement is transmitted to inertia mass 50 via shaft 41 and arm 51. Since pin 110 of shift select lever shaft 60 is connected to one of shift heads 120 to 122, pin 110 can move one of shift heads 120 to 122 to shift into a predetermined gear.

Referring to Fig. 2, the first engaging portion 62 and the second engaging portion 61 are concave portions, and they are disposed in line. The first engaging portion 62 and the second engaging portion 61 are not necessarily concave portions, and they may be convex portions.

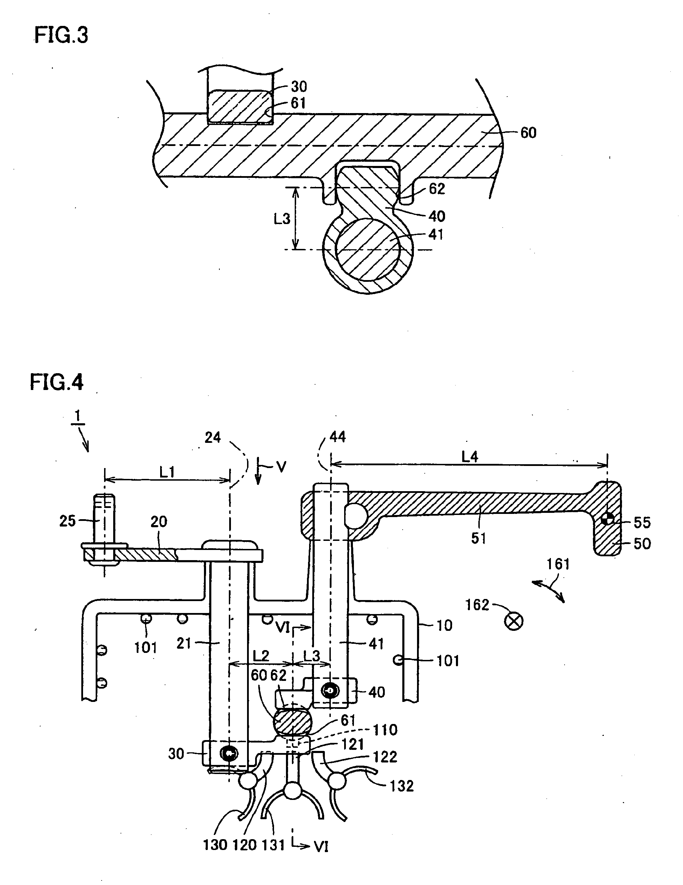

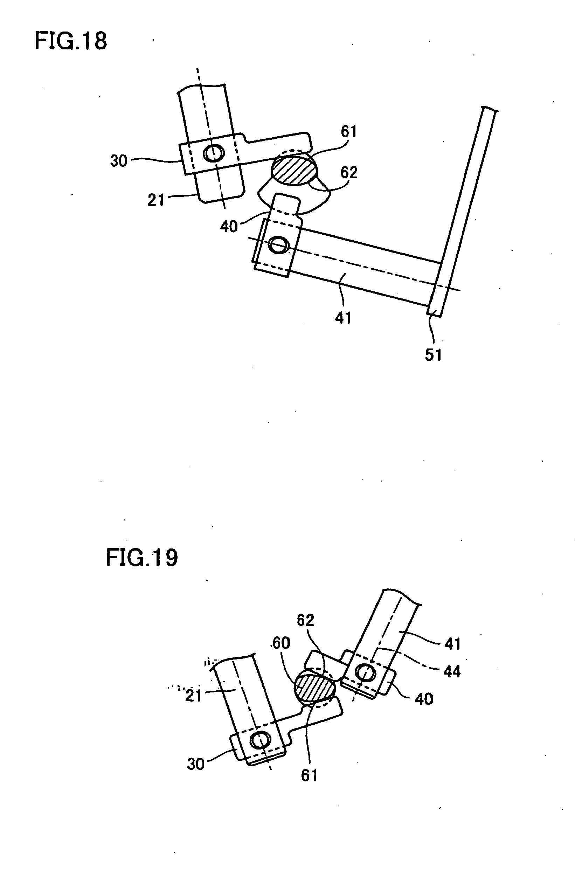

Fig. 3 is a cross sectional view of the first engaging portion and the second engaging portion in accordance with another example. Referring to Fig. 3, the first engaging portion 62 and the second engaging portion 61 may be disposed out of alignment with each other. Although the first engaging portion 62 is provided on the lower side of shift select lever shaft 60 and the second engaging portion 61 is provided on the upper side of shift select lever shaft 60 in Figs. 2 and 3, their arrangement is not limited to this structure, and the first engaging portion 62 may be provided on any of the upper side and the lower side of shift select lever shaft 60. Similarly, the second engaging portion 61 may be provided on any of the upper side and the lower side of shift select lever shaft 60. Further, shaft 41 and shaft 21 may be disposed at a free position both in the axial direction and the rotational direction as shown in Fig. 18.

Further, although Fig. 1 shows a structure in which inertia mass 50 is accommodated in case 10, their arrangement is not limited to this structure. Case 10 may be located at a position indicated by a two-dot chain line, and inertia mass 50 and arm 51 may be located outside case 10. The inside of case 10 is lubricated with lubricating oil 101.

In shift mechanism 1 in accordance with the first embodiment formed as described above, the transmission can be reduced in size by providing inertia mass 50 to the first inner lever 40. Further, the effect of the inertia mass can be enhanced by adjusting the two lever ratios (L2/L1 and L4/L3), obtaining an inertia mass having a lighter weight.

Second Embodiment

Fig. 4 is a cross sectional view of a shift mechanism of a transmission in accordance with a second embodiment of the present invention. Referring to Fig. 4, shift mechanism 1 in accordance with the second embodiment is different from shift mechanism 1 in accordance with the first embodiment in that the first axis of rotational movement 44 and the second axis of rotational movement 24 are parallel to each other. The second engaging portion 61 is provided on the lower side of shift select lever shaft 60, and the first engaging portion 62 is provided on the upper side of shift select lever shaft 60. When operation pin 25 is moved rotationally about the second axis of rotational movement 24, this rotational movement is transmitted to shaft 21 via outer lever 20. Shaft 21 rotationally moves the second inner lever 30 about the second axis of rotational movement 24. Since the second inner lever 30 engages shift select lever shaft 60 at the second engaging portion 61, shift select lever shaft 60 slides in the direction indicated by arrow 162. On this occasion, since pin 110 is connected to one of shift heads 120 to 122, pin 110 can move one of shift heads 120 to 122 to shift into a predetermined gear.

Since the first inner lever 40 engages shift select lever shaft 60 by means of the first engaging portion 62, when shift select lever shaft 60 moves in the direction indicated by arrow 162, the first inner lever 40 moves rotationally about the first axis of rotational movement 44. This rotational movement is transmitted to inertia mass 50 via shaft 41 and arm 51, and inertia mass 50 moves rotationally about the first axis of rotational movement 44.

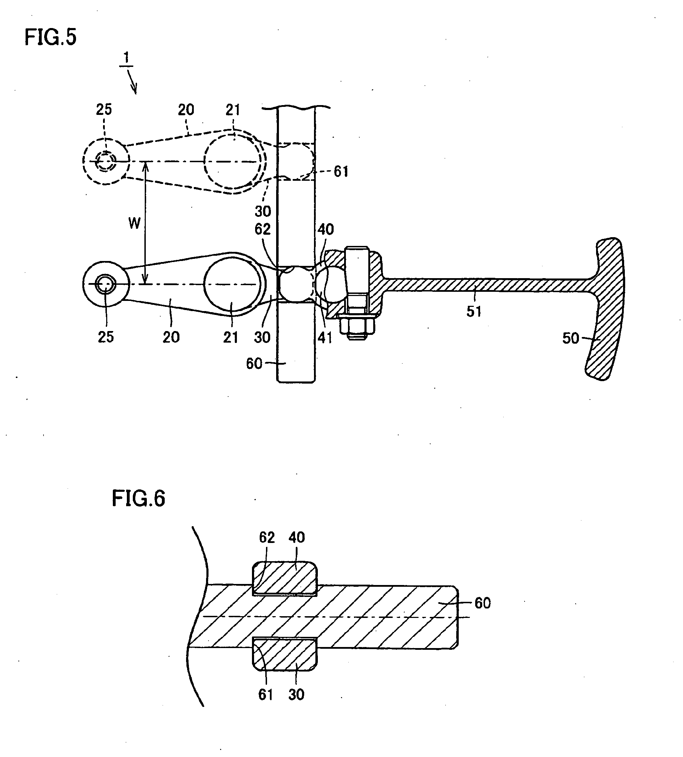

Fig. 5 is a plan view seen from a direction indicated by an arrow V in Fig. 4. Referring to Fig. 5, outer lever 20 may be provided at a position indicated by a solid line. In this case, arm 51 and outer lever 20 are located in the same plane. Unlike this arrangement, outer lever 20 may be provided at a position indicated by a dashed line. In this case, the position indicated by the dashed line is apart from the position indicated by the solid line by a distance W. The position of outer lever 20 is not particularly limited as long as outer lever 20 is located such that its movement can be transmitted to shift select lever shaft 60 via the second engaging portion 61.

Fig. 6 is a cross sectional view along a line VI-VI in Fig. 4. Referring to Fig. 6, the first inner lever 40 engages (fits into) shift select lever shaft 60 at the first engaging portion 62. The second inner lever 30 engages (fits into) the second engaging portion 61 of shift select lever shaft 60.

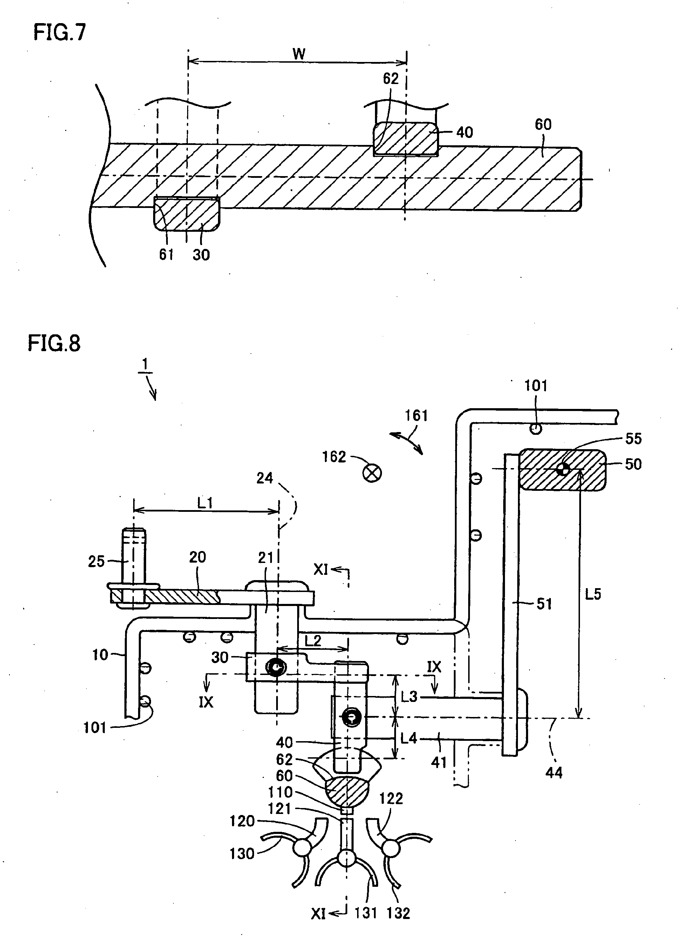

Fig. 7 is a cross sectional view of a shift select lever shaft in accordance with another example. Note that Fig. 7 is a cross sectional view when the outer lever is located at the position indicated by the dashed line in Fig. 5. Referring to Fig. 7, the first engaging portion 62 and the second engaging portion 61 of shift select lever shaft 60 are out of alignment with each other by distance W.

With the shift mechanism in accordance with the second embodiment formed as described above, an effect similar to that of the shift mechanism in accordance with the first embodiment can also be obtained.

Third Embodiment

Fig. 8 is a cross sectional view of a shift mechanism in accordance with a third embodiment of the present invention. Referring to Fig. 8, the shift mechanism in accordance with the third embodiment of the present invention is different from shift mechanism 1 in accordance with the first embodiment in that the second inner lever 30 engages shift select lever shaft 60 via the first inner lever 40.

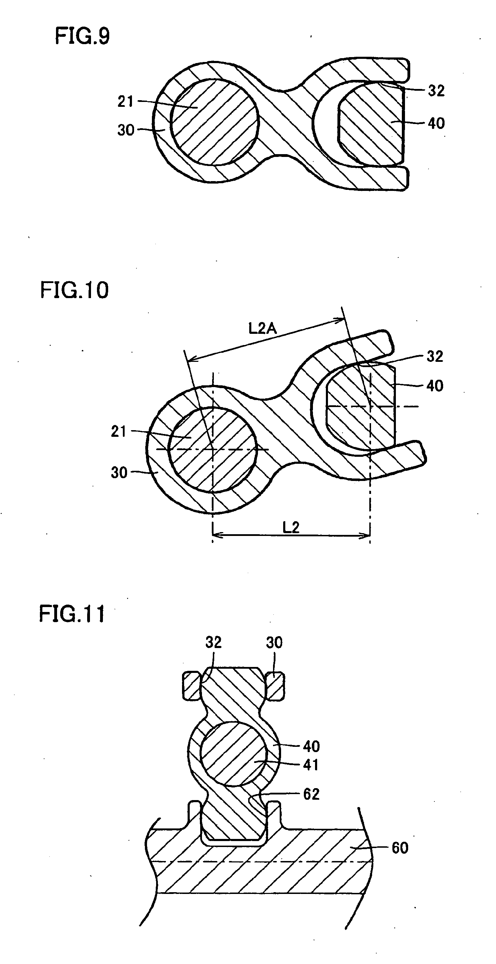

Fig. 9 is a cross sectional view along a line IX-IX in Fig. 8. Referring to Figs. 8 and 9, a second engaging portion 32 having a concave shape is formed at a leading end of the second inner lever 30, and the second engaging portion 32 engages a leading end portion of the first inner lever 40. The first axis of rotational movement 44 and the second axis of rotational movement 24 are orthogonal to each other, and the first inner lever 40 can move rotationally about the first axis of rotational movement 44. Since one end of the first inner lever 40 engages the second inner lever 30 and the other end thereof engages shift select lever shaft 60 at the first engaging portion 62, rotational movement of the second inner lever 30 is transmitted to shift select lever shaft 60 as rotational movement in an opposite direction. A lever ratio in the present embodiment is given by the following expression:

$$(L2/L1) \times (L5/L3).$$

Although the present embodiment shows a structure in which case 10 surrounds inertia mass 50, their arrangement is not limit to this structure. Case 10 may be reduced in size as indicated by a two-dot chain line, and inertia mass 50 may be located outside case 10.

Fig. 10 is a cross sectional view of the second inner lever which has moved rotationally. Referring to Fig. 10, length L2 from the second axis of rotational movement to the second engaging portion 32 before the rotational movement is almost equal to a length L2A from the second axis of rotational movement to the second engaging portion 32 after the rotational movement.

Fig. 11 is a cross sectional view along a line XI-XI in Fig. 8. Referring to Fig. 11, the first inner lever 40 is formed to fit with shaft 41 and have portions projecting upward and downward. The projecting portions engage shift select lever shaft 60 and the second inner lever 30, constituting the first engaging portion 62 and the second engaging portion 32, respectively.

Although concave portions are provided in shift select lever shaft 60 and the second inner lever 30 and convex portions are provided on the first inner lever 40 in Fig. 11, convex portions may be provided on shift select lever shaft 60 and the second inner lever 30 and concave portions may be provided in the first inner lever 40 to fit with the convex portions, and these convex and concave portions may be engaged to constitute the first engaging portion 62 and the second engaging portion 32.

With shift mechanism 1 in accordance with the third embodiment formed as described above, an effect similar to those of the shift mechanisms in accordance with the first and the second embodiments can also be obtained.

Further, it has an effect that only one engaging portion is provided in shift select lever shaft 60, eliminating the need for providing a plurality of engaging portions in shift select lever shaft 60.

Fourth Embodiment

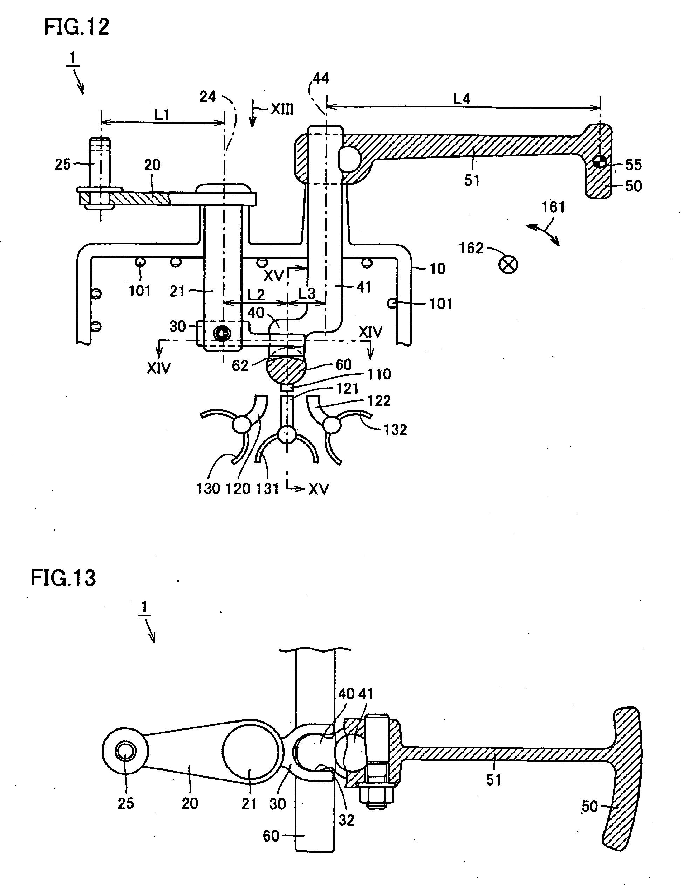

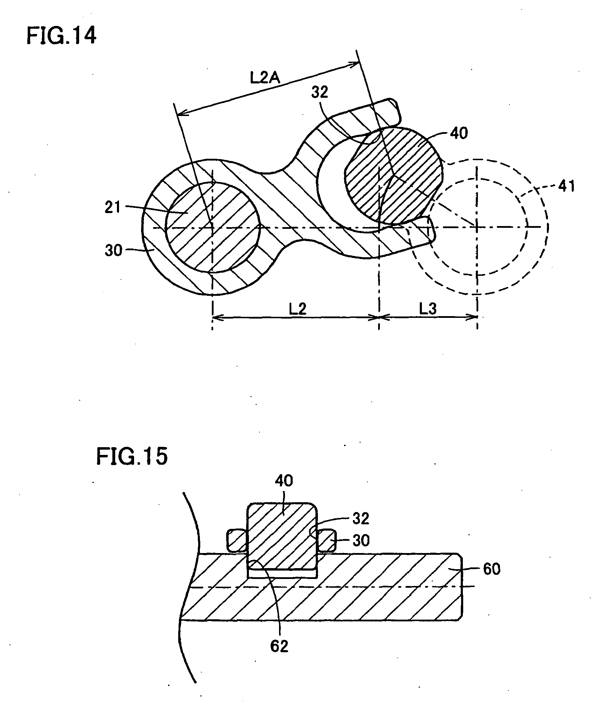

Fig. 12 is a cross sectional view of a shift mechanism of a transmission in accordance with a fourth embodiment of the present invention. Fig. 13 is a plan view of the shift mechanism seen from a direction indicated by an arrow XIII in Fig. 12. Fig. 14 is a cross sectional view along a line XIV-XIV in Fig. 12. Fig. 15 is a cross sectional view along a line XV-XV in Fig. 12. Referring to Figs. 12 and 13, in shift mechanism 1 in accordance with the fourth embodiment, the first inner lever 40 and shaft 41 are integrated, and the first inner lever 40 engages the second inner lever 30 and shift select lever shaft 60. Outer lever 20 and inertia mass 50 are provided to have independent axes of rotational movement. Specifically, outer lever 20 moves rotationally about the second axis of rotational movement 24, and inertia mass 50 moves rotationally about the first axis of rotational movement 44. Outer lever 20 is coupled with the second inner lever 30 to move rotationally as a unit. Inertia mass 50 is coupled with the first inner lever 40 to move rotationally as a unit. The first inner lever 40 fits into a groove in shift select lever shaft 60, and when shift select lever shaft 60 moves, the first inner lever 40 sandwiched by the second inner lever 30 is moved.

A lever ratio is given by the following expression:

$$(L4/L3)\times(L2/L1).$$

Since the effect of the mass is proportional to the square of the lever ratio, if it is set as $L2>L3$, the effect of the mass greater by the square of $(L2/L3)$ can be obtained as compared with a lever ratio $L4/L1$ when arm 51 is directly coupled with outer lever 20.

Inertia mass 50 is supported with a bearing to be rotatable independently, and is electrically connected with the first inner lever 40. The first axis of rotational movement 44, which is a pivot of inertia mass 50, may be parallel or perpendicular to the axes of rotational movement of the first and the second inner levers. Further, as shown in Fig. 19, the first axis of rotational movement 44 may be disposed obliquely relative to the axes of rotational movement of the first and the second inner levers. Distance L4 from the center of gravity 55 of inertia mass 50 to the first axis of rotational movement 44, which is the pivot, is set longer than distance L3 from the second engaging portion 32, which is a portion electrically connecting inertia mass 50 with the second inner lever 30, to the first axis of rotational movement 44. Distance L2 from the second engaging portion 32 to the second axis of rotational movement 24 is set longer than distance L3 from the second engaging portion 32 to the first axis of rotational movement 44. Although inertia mass 50 is moved using a link mechanism in the present embodiment, inertia mass 50 may be moved by means of a gear, a chain, or the like, instead of a link mechanism.

Referring to Figs. 14 and 15, in the present embodiment, the lever ratio in a neutral state differs from that in a shift state. Specifically, in a neutral state, the distance from the second axis of rotational movement 24 to the second engaging portion 32 is equal to L2, whereas in a shift state, the distance from the second axis of rotational movement 24 to the second engaging portion 32 is equal to L2A, which is greater than L2. At the beginning of a shift operation, the lever ratio is high, and thus operation force can be reduced. In a later part of the shift operation having less operation force, the lever ratio is reduced, and thus stroke can be shortened. As a result, the shift mechanism is formed to be capable of minimizing an increase in the stroke and reducing the operation force.

Specifically, shift operation force is transmitted from the second inner lever 30 via the first inner lever 40 to the shift select lever shaft. On this occasion, while the length of the second inner lever 30 is L2 in the neutral state, it is increased to L2A after the shift state. Accordingly, a high lever ratio can be obtained in a period from the beginning of a shift operation to the establishment of synchronization, which requires operation force most, and the lever ratio can be reduced to shorten the stroke in a period after the synchronization, which does not require a large amount of operation.

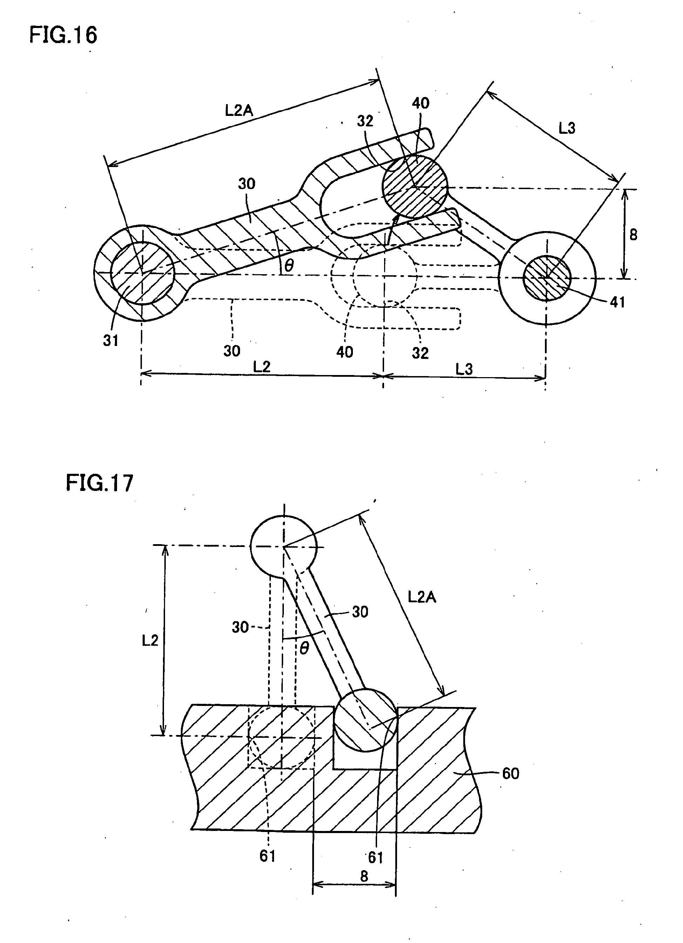

Such a structure capable of changing the lever ratio will be described in detail. Referring to Fig. 16, to obtain a shift stroke of 8mm when L2=25 and L3=15, a shift angle θ is 16.4°. Further, L2A is 28.4.

In contrast, in the mechanism shown in Fig. 17, L2=L2A, and thus there is no change in the lever ratio. In this case, shift angle θ is 18.7°. In the mechanisms shown in Figs. 16 and 17, the ratio between the two shift angles is 18.7/16.4=1.14. Consequently, a 14% reduction in the shift stroke can be achieved.

Although the present invention has been described and illustrated in detail, it is clearly understood that the same is by way of illustration and example only and is not to be taken by way of limitation, the scope of the present invention being limited only by the terms of the appended claims.

**Claims**

1.  A shift mechanism of a transmission, comprising:

    a case (10);
    a shift select lever shaft (60) accommodated in said case (10) and capable of shifting in an axial direction and moving rotationally in a circumferential direction;
    **characterised in that** further comprising:
    a first inner lever (40) engaging said shift select lever shaft (60) at a first engaging portion (62) within said case (10), coupled with an inertia mass (50), and moving rotationally about a first axis of rotational movement (44); and
    a second inner lever (30) engaging said shift select lever shaft (60) at a second engaging portion (61) within said case (10), coupled with an outer lever (20), and moving rotationally about a second axis of rotational movement (24), wherein a length from said first axis of rotational movement (44) to a center of gravity (55) of said inertia mass (50) is longer than a length from said first engaging portion (62) to said first axis of rotational movement (44), and a length from said second axis of rotational movement (24) to an operating point (25) of said outer lever (20) is longer than a length from said second engaging portion (61) to said second axis of rotational movement (24).

2. The shift mechanism of a transmission according to claim 1, wherein said inertia mass (50) moves rotationally about said first axis of rotational movement (44) to move said shift select lever shaft (60) in the axial direction.

3. The shift mechanism of a transmission according to claim 1, or 2, wherein at least one of said first axis of rotational movement (44) and said second axis of rotational movement (24) is not parallel to said shift select lever shaft (60).

4. A shift mechanism of a transmission, comprising:

   a case (10);
   a shift select lever shaft (60) accommodated in said case (10) and capable of shifting in an axial direction and moving rotationally in a circumferential direction;
   **characterised in that** further comprising :
   a first inner lever (40) engaging said shift select lever shaft (60) at a first engaging portion (62) within said case (10), coupled with an inertia mass (50), and moving rotationally about a first axis of rotational movement (44); and
   a second inner lever (30) engaging said first inner lever (40) at a second engaging portion (32) within said case (10), coupled with an outer lever (20), and moving rotationally about a second axis of rotational movement (24), wherein

   a length from said first axis of rotational movement (44) to a center of gravity (55) of said inertia mass (50) is longer than a length from said first engaging portion (62) to said first axis of rotational movement (44), and a length from said second axis of rotational movement (24) to an operating point (25) of said outer lever (20) is longer than a length from said second engaging portion (32) to said second axis of rotational movement (24).

5. The shift mechanism of a transmission according to claim 4, wherein
   a distance from said second axis of rotational movement (24) to said second engaging portion (32) changes according to rotational movement of said outer lever (20).

6. The shift mechanism of a transmission according to claim 4 or 5, wherein said inertia mass (50) moves rotationally about said first axis of rotational movement (44) to move said shift select lever shaft (60) in the axial direction.

7. The shift mechanism of a transmission according to claim 4, 5 or 6, wherein at least one of said first axis of rotational movement (44) and said second axis of rotational movement (24) is not parallel to said shift select lever shaft (60).

**Patentansprüche**

1. Getriebebetätigungsmechanismus mit:

   einem Gehäuse (10);
   einer Gangschaltungshebelstange (60), die in dem Gehäuse (10) aufgenommen ist und in der Lage ist, sich in einer axialen Richtung zu verschieben und in einer Umfangsrichtung drehend zu bewegen;
   **dadurch gekennzeichnet, dass** er außerdem umfasst:

   einen ersten inneren Hebel (40), der an einem ersten Eingriffsabschnitt (62) innerhalb des Gehäuses (10) mit der Gangschaltungshebelstange (60) in Eingriff ist, mit einer Trägheitsmasse (50) gekoppelt ist, und sich drehend um eine erste Drehachse (44) bewegt; und
   einen zweiten inneren Hebel (30), der an einem zweiten Eingriffsabschnitt (61) innerhalb des Gehäuses (10) mit der Gangschaltungshebelstange (60) in Eingriff ist, mit einem äußeren Hebel (20) gekoppelt ist, und sich drehend um eine zweite Drehachse (24) bewegt, wobei eine Länge von der ersten Drehachse (44) zu einem Schwerpunkt (55) der Trägheitsmasse (50) länger als eine Länge von dem ersten Eingriffsabschnitt (62) zu der ersten Drehachse (44) ist, und eine Länge von der zweiten Drehachse (24) zu einem Betätigungspunkt (25) des äußeren Hebels (20) länger als eine Länge von dem zweiten Eingriffsabschnitt (61) zu der zweiten Drehachse (24) ist.

2. Getriebebetätigungsmechanismus nach Anspruch 1, wobei die Trägheitsmasse (50) sich drehend um die erste Drehachse (44) bewegt, um die Gangschaltungshebelstange (60) in der axialen Richtung zu bewegen.

3. Getriebebetätigungsmechanismus nach Anspruch 1 oder 2, wobei wenigstens eine der Drehachsen aus der ersten Drehachse (44) und der zweiten Drehachse (24) nicht parallel zu der Gangschaltungshebelstange (60) liegt.

4. Getriebebetätigungsmechanismus mit:

einem Gehäuse (10);
einer Gangschaltungshebelstange (60), die in dem Gehäuse (10) aufgenommen ist und in der Lage ist, sich in einer axialen Richtung zu verschieben und in einer Umfangsrichtung drehend zu bewegen;
**dadurch gekennzeichnet, dass** er außerdem umfasst:

einen ersten inneren Hebel (40), der an einem ersten Eingriffsabschnitt (62) innerhalb des Gehäuses (10) mit der Gangschaltungshebelstange (60) in Eingriff ist, mit einer Trägheitsmasse (50) gekoppelt ist, und sich drehend um eine erste Drehachse (44) bewegt; und
einen zweiten inneren Hebel (30), der an einem zweiten Eingriffsabschnitt (32) innerhalb des Gehäuses (10) mit dem ersten inneren Hebel (40) in Eingriff ist, mit einem äußeren Hebel (20) gekoppelt ist, und sich drehend um eine zweite Drehachse (24) bewegt, wobei
eine Länge von der ersten Drehachse (44) zu einem Schwerpunkt (55) der Trägheitsmasse (50) länger als eine Länge von dem ersten Eingriffsabschnitt (62) zu der ersten Drehachse (44) ist, und eine Länge von der zweiten Drehachse (24) zu einem Betätigungspunkt (25) des äußeren Hebels (20) länger als eine Länge von dem zweiten Eingriffsabschnitt (32) zu der zweiten Drehachse (24) ist.

5. Getriebebetätigungsmechanismus nach Anspruch 4, wobei ein Abstand von der zweiten Drehachse (24) zu dem zweiten Eingriffsabschnitt (32) sich gemäß der Drehbewegung des äußeren Hebels (20) ändert.

6. Getriebebetätigungsmechanismus nach Anspruch 4 oder 5, wobei die Trägheitsmasse (50) sich drehend um die erste Drehachse (44) bewegt, um die Gangschaltungshebelstange (60) in die axiale Richtung zu bewegen.

7. Getriebebetätigungsmechanismus nach Anspruch 4, 5, oder 6, wobei wenigstens eine der Drehachsen aus der ersten Drehachse (44) und der zweiten Drehachse (24) nicht parallel zu der Gangschaltungshebelstange (60) liegt.

**Revendications**

1. Mécanisme de changement de vitesse d'une transmission, comprenant :

un carter (10) ;
un arbre de levier de sélection de vitesse (60) logé dans ledit carter (10) et capable de changer dans une direction axiale et de se déplacer en rotation dans une direction circonférentielle ;
**caractérisé en ce qu'**il comprend en plus :

un premier levier interne (40) engageant ledit arbre de levier de sélection de vitesse (60) au niveau d'une première partie d'engagement (62) dans ledit carter (10), couplé avec une masse d'inertie (50), et se déplaçant en rotation autour d'un premier axe de mouvement de rotation (44) ; et
un deuxième levier interne (30) engageant ledit arbre de levier de sélection de vitesse (60) au niveau d'une deuxième partie d'engagement (61) dans ledit carter (10), couplé avec un levier externe (20), et se déplaçant en rotation autour d'un deuxième axe de mouvement de rotation (24), où
une longueur dudit premier axe de mouvement de rotation (44) à un centre de gravité (55) de ladite masse d'inertie (50) est plus importante qu'une longueur de ladite première partie d'engagement (62) audit premier axe de mouvement de rotation (44), et
une longueur dudit deuxième axe de mouvement de rotation (24) à un point d'actionnement (25) dudit levier externe (20) est plus importante qu'une longueur de ladite deuxième partie d'engagement (61) audit deuxième axe de mouvement de rotation (24).

2. Mécanisme de changement de vitesse d'une transmission selon la revendication 1, dans lequel ladite masse d'inertie (50) se déplace en rotation autour dudit premier axe de mouvement de rotation (44) pour déplacer ledit arbre de levier de sélection de vitesse (60) dans la direction axiale.

3. Mécanisme de changement de vitesse d'une transmission selon la revendication 1 ou 2, dans lequel au moins l'un dudit premier axe de mouvement de rotation (44) et dudit deuxième axe de mouvement de rotation (24) n'est pas parallèle audit arbre de levier de sélection de vitesse (60).

4. Mécanisme de changement de vitesse d'une transmission, comprenant :

un carter (10) ;
un arbre de levier de sélection de vitesse (60) logé dans ledit carter (10) et capable de changer dans une direction axiale et de se déplacer en rotation dans une direction circonférentielle ;
**caractérisé en ce qu'**il comprend en plus :

un premier levier interne (40) engageant ledit arbre de levier de sélection de vitesse (60) au niveau d'une première partie d'engagement (62) dans ledit carter (10), couplé avec une masse d'inertie (50), et se déplaçant en rotation autour d'un premier axe de mouvement de rotation (44) ; et
un deuxième levier interne (30) engageant ledit premier levier interne (40) au niveau d'une deuxième partie d'engagement (32) dans ledit carter (10), couplé avec un levier externe (20), et se déplaçant en rotation autour d'un deuxième axe de mouvement de rotation (24), où
une longueur dudit premier axe de mouvement de rotation (44) à un centre de gravité (55) de ladite masse d'inertie (50) est plus importante qu'une longueur de ladite première partie d'engagement (62) audit premier axe de mouvement de rotation (44), et une longueur dudit deuxième axe de mouvement de rotation (24) à un point d'actionnement (25) dudit levier externe (20) est plus importante qu'une longueur de ladite deuxième partie d'engagement (32) audit deuxième axe de mouvement de rotation (24).

5. Mécanisme de changement de vitesse d'une transmission selon la revendication 4, dans lequel une distance dudit deuxième axe de mouvement de rotation (24) à ladite deuxième partie d'engagement (32) change selon un mouvement de rotation dudit levier externe (20).

6. Mécanisme de changement de vitesse d'une transmission selon la revendication 4 ou 5, dans lequel ladite masse d'inertie (50) se déplace en rotation autour dudit premier axe de mouvement de rotation (44) pour déplacer ledit arbre de levier de sélection de vitesse (60) dans la direction axiale.

7. Mécanisme de changement de vitesse d'une transmission selon la revendication 4, 5 ou 6, dans lequel au moins l'un dudit premier axe de mouvement de rotation (44) et dudit deuxième axe de mouvement de rotation (24) n'est pas parallèle audit arbre de levier de sélection de vitesse (60).

FIG.1

FIG.2

FIG.3

FIG.4

FIG.5

FIG.6

12

FIG.7

FIG.8

EP 1 717 490 B1

FIG.9

21
30
32
40

FIG.10

L2A

32
40
21
30
L2

FIG.11

32   30
40
41
62
60

14

FIG.12

FIG.13

FIG.14

FIG.15

FIG.16

FIG.17

FIG.18

FIG.19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8042689 A
- JP 9257127 A
- JP 2001246957 A
- DE 202004006953 U1
- DE 19532141 A1